# EUROPEAN PATENT SPECIFICATION

(11) **EP 3 377 396 B1**
(45) Date of publication and mention of the grant of the patent: **04.01.2023**
(21) Application number: 16820011.1
(22) Date of filing: 18.11.2016
(51) Int. Cl.: B62D 55/26, B62D 55/20, B62D 55/24

(54) **TRACTION BELT OF VEHICLE**
ZUGGURT EINES FAHRZEUGS
COURROIE DE TRACTION DE VÉHICULE

(30) Priority: 18.11.2015 SK 500772015
(43) Date of publication of application: 26.09.2018
(73) Proprietor: KOKS Robotics s.r.o., 917 02 Trnava (SK)
(72) Inventor: MAJERSKY, Dusan, 917 01 Trnava (SK); HRIVNÁK, Vladimír, 922 07 Pecenady (SK)
(74) Representative: Porubcan, Róbert
(86) International application number: PCT/IB2016/056957
(87) International publication number: WO 2017/085678

(56) References cited:
- EP-A1- 1 430 999
- EP-A2- 0 319 141
- EP-A2- 0 716 006
- EP-A2- 1 283 151
- WO-A1-89/07121
- WO-A1-03/037128
- WO-A1-2010/059286
- DE-A1- 3 725 742
- GB-A- 1 256 520
- US-A- 4 915 895
- US-A- 6 017 103
- US-A1- 2002 145 335

## Description

### Field of technology

The invention concerns a traction belt of the vehicle which transfers the forces from the creeper undercarriage to the ground. The traction belt increases the force which can be transferred in any direction and it can be preferably used mainly during the remote controlled or automatized undercarriages which move on the smooth surfaces, polluted by petroleum substances,

### Prior state of the art

Creeper undercarriages are capable of moving on various surfaces; they have lower specific pressure, and they overcome the irregularities of a terrain more evenly.

Aside from construction and military vehicles, the creeper undercarriages are used with remote controlled or robotized vehicles or trolleys, too, which can be used for broad range of purposes. Such trolleys are capable of moving on the stairs or in heavily polluted environment, where there is a risk of sticking or jamming in case of wheeled undercarriage.

Solution according to JPH0672362 discloses a rubber traction belt with reinforcing inserts. Document US2002145335 discloses that it is preferable to use rubber belt with differing rubber hardness in particular zones, which allows for better transfer of the forces while the sufficient longevity of the belt is ensured. These solutions, however, do not bring about acceptable results in cases of very smooth surfaces - for example metal surfaces; they are, moreover, completely useless in cases of smooth surfaces polluted by greasy, oily substances.

Solution according to CN101428528 should offer safe transfer of the forces in the explosive environment, too; however, it does not solve the problem of low adhesion between the surface and traction belt. All known solutions proceed in such a way in order to increase the adhesion between the traction belt and the surface that they produce variously shaped grip elements on the belt, various hardnesses on the touch surface and so on; this does not increase the traction power to the desired level. On smooth sheets with the oil pollution the friction coefficient is less than 0,1.

Publication EP 0319141 A2 describes a composite tread member used in a track for a track-laying vehicle. Composite tread is moulded from a polymeric material reinforced with abrasion-resistant monofilaments. Monofilaments are oriented substantially perpendicularly to wear surface of tread member to obtain the maximum abrasion resistance.

In order to increase the overall traction power of the traction belt the weight of the undercarriage or superstructure can be increased - for example by weights - but lowers the agility and the energetic effectiveness of the vehicle, which does not lead to improvements in case of work on sloped surfaces. It is desirable to increase the force which can be transferred by the creeper undercarriage without the increase of the weight of the vehicle, mainly in cases of smooth, for example metal surfaces, which are polluted by oil or petroleum.

### Essence of the invention

Abovementioned deficiencies are significantly remedied by the traction belt of the vehicle according to claims 1 to 13. The traction belt has a touch surface on its outer circumference intended for the transfer of the traction powers from the creeper undercarriage to the surface, and which has on its inner circumference the elements for the transfer of the torque from the driving wheel to the traction belt according to this invention, which essence lies in the fact it has on its touch surface a layer with the abrasive grains (or abrasive particles), whereby the size of this grains is larger than 200 µm.

The traction belt can be composed of segments which are connected together by the pins into a closed belt. In such case the abrasive grains will be distributed on the solid touch surface of the segment. In another arrangement the traction belt can be produced from flexible material - for example from the rubber or similar material (materials containing natural rubber, synthetic rubber, synthetic elastomer). In such case the flexible belt will have the touch surfaces produced on its outer circumference - for example in forms of protrusions which are mutually separated in order to decrease the bending stress of the belt. Abrasive grains will be distributed on the touch surfaces of the belt, for example on the protrusions of the belt.

Abrasive layer will usually have a form of the flat, bendable (or flexible) carrier with the glued abrasive grains. The carrier can be a textile (cloth) or a paper or any other carrier, such as the one used with so called sand paper, or abrasive cloth, respectively. It is precisely the sand paper, or abrasive cloth, which will in preferable arrangement form the abrasive layer of the touch surface. The size of the abrasive grain larger than 200 µm corresponds to the grit size of paper or cloth of 80 according to CAMI (Coated Abrasive Manufacturing Institute) standard. In preferable arrangement, the grit size will be larger than 600 µm, which corresponds to grit size of 30 according to CAMI standard.

The significant feature of this invention is the use of the abrasive mean for a different goal - that is, in order to increase a friction force between touch surface and the ground. In the process of inventing it has been found out that the sand paper or abrasive cloths crucially increase the friction coefficient between the belt and the smooth surface, especially if the surface is polluted by petroleum substances. The increase of the friction coefficient is more than double, almost more than five times as compared to, for example, rubber. The layer with the abrasive grains of the touch surface does not have any abrasive effect in the straightforward direction of the movement of the traction belt, because during common operation there is no slippage, precisely because of the use of the abrasive grains. The abrasive grains are thus used not for abrasion or for smoothing of the surface, but for the punctual pressing out of the layer of the slippery material from the ground. If a greasy pollution - for example crease or oil - is on the smooth surface, the adhesion of the common traction belts decreases significantly, sometimes only to the fraction of the original value, but in case of the traction belt according to this invention the value of the traction does not decrease - or it decreases insignificantly.

Abrasive grains have sharp-edged protrusions; in place of contact of the surface with the protrusions a high punctual pressure is achieved; thanks to this, the surface layer of the petroleum substance or other pollution is pressed out. Large amount of protrusions of the abrasive grains on the touch surface of the segment forms a reinforcement for the transfer of the shear forces in all directions. Abrasive grains are distributed randomly on the sand paper or abrasive grain, but the amount of the abrasive grains for the dm² is large, and therefore - statistically - the distribution of the grains is even.

The advantage of the proposed solution also lies in the fact that the coefficient of the friction between the abrasive grains and the ground in the static state is significantly higher than in case of mutual movement which is typical for abrasion. This makes use of the feature of the abrasive grains which is only marginal and insignificant in their typical usage. Surprising effect of the use of the abrasive grains is also in overcoming of a particular technical stereotype, when all constructors try to avoid the use of the abrasive material in the vicinity of the traction belt. There are many inventions which try to find out how to prevent the entering of the sand and other abrasive parts to the moving parts of the traction belt. This leads to idea that such particles are undesired in the traction belt. However, this invention brings such increase in the friction or adhesive power, respectively, that all other risks of the presence of the abrasive grains in multiple applications are unimportant. Moreover, if the abrasive grains are released, they remain on the ground and they do not tend to enter the moving parts of the undercarriage. Risks connected with the presence of the abrasive grains from the point of view of the longevity of the creeper undercarriage are in proposed invention suppressed. Remotely controlled trolleys do not have to achieve high longevity of the belt per many kilometers as is usually required in cases of means of transport. Moreover, the trolley with this traction belt according to this invention will be mostly used to clean the containers for petroleum products, where the released abrasive grains are usually sucked away together with other impurities.

The abrasive grains can be produced from the aluminum oxide (corundum, Al₂O₃) and/or from silicon carbide (SiC) and/or from zircon (ZrSiO₄) and/or from ceramic or from combination of these materials. It will be preferable if the abrasive grains produced sharp-edged formations after the breaking.

In order to achieve the even transfer of the traction force in case of the belt with the connected segment it is necessary that at least three segments in such traction belt are equipped with the abrasive layer; this ensures that there is always at least one segment with the abrasive layer in the grip. It will be preferable if there are more such segments in the belt; for example, every second one, or all of them. Abrasive layers with differing grit size can be used on the segments in order to achieve desired effect on various surfaces,

Use of the existing abrasive grains, abrasive means in form of the sand paper or abrasive cloth, brings about the advantage of simple attachment of the abrasive layer to the touch surface. All methods of attachment known in the prior state of the art where sand papers and abrasive cloths are used can be used in order to do so. Abrasive layer can be directly glued on the touch surface of the segment. Abrasive layer can be produced on the cartridge which is screwed to the segment; alternatively, the cartridge has a shape lock for the insertion to the segment. The abrasive layer can be connected to a touch surface by the clips which are used with the vibration sander with the abrasive cloth. The segments can have flanges above the edges of the touch surfaces, whereby the ends of the sand paper or abrasive cloth are pressed and clutched into the segment by the protruding flanges. An arrangement where the abrasive layer is attached to the touch surface by Velcro fastener can be used, too.

It is preferable if the abrasive layer is replaceable, but it can also be permanently connected with the segments, since the segments - or whole belt - are usually replaceable themselves.

Abrasive layer with the abrasive grains can be applied onto the belt in such a way where the abrasive grains are applied to the layer of the glue on the touch surface. Such solution does not allow the replacement of the abrasive layer, but such layer can be easily repaired by application of a new layer of glue on the old abrasive layer, and insertion of new abrasive grains in it. If the belt is made from rubber, abrasive grains can be vulcanized into the touch surface.

Such solution is advantageous where the abrasive layer is applied onto the metal sheet which is attached to the segment of the traction belt. This solution can be realized in such a way that the segment has a removable metal sheet touch surface and the abrasive layer is applied to it. After the wearing out, the metal sheet with the touch surface is replaced. A solution is also advantageous where the sheet is mounted onto the touch surface of the segment, for example by screws. The worn out sheets with the abrasive layers are thus easily replaced.

The solution will be advantageously used on the traction belts of the remotely controlled trolleys which move on the metal surfaces in the industrial objects - metal floors which are polluted by petroleum products. If the ground is from steel, for example in form of steel sheets or racks, it is preferable if the traction belt or its segments are equipped with magnets. Stable magnets or electromagnets increase the contact pressure of the segment to the ground without the increase of the weight of the vehicle. The electromagnets can be controlled in such a way that they switch into the active position after the approaching of the respective segment - or respective part of the traction belt, respectively - to the surface; that is, during the move of the respective segment to the grip. Before the release from the grip the electromagnet of the respective segment can be switched off, so that the required force needed for the lifting of the segment from the grip is decreased. Magnets can be placed in the flexible traction belt, too, where they are for example cast-in in the elastomer or vulcanized in the rubber.

The use of this invention in the trolleys used for cleaning of the containers for the petroleum substances is especially advantageous. In such containers or tanks, the bottom is covered by the layer of oil remnants even after complete drain. The use of the segments with the magnets and abrasive layer according to this invention proved very advantageous here, too. The invention offers a very simple and surprisingly effective arrangement, where the mean used in other field of technology is used in another one. Abrasive layers are on the segments, they do not affect the safety of the work even in the environment with highest level of explosiveness, for example in 0 zone according to ATEX standard. Abrasive grains with the size according to this invention do not produce sparks even during the slippage, which cannot be avoided in cases of creeper undercarriages. This may appear surprising, since - in general - during the abrasion, which is main and typical application of the abrasive grains, sparks are typical attendant phenomenon. Broken off or released abrasive grains are removed during the cleaning of the bottom of the oil tank together with the impurities, and they therefore present no risk to the longevity of the creeper undercarriage.

Trolley with the traction belt according to this invention can be preferably used for the work in oil rigs, oil platforms, oil tankers, and on the smooth surfaces of various technological devices where the pollution of the surface by lubricants, petroleum or industrial products decreasing the traction features, can take place. The traction belt with the abrasive grains on the surface can be used in other fields where greasy or similarly polluted smooth surfaces exist, for example in meat industry, fishing ships and so on. Abrasive grains can be applied on the footwear of the workers working in such environment.

### Brief description of drawings

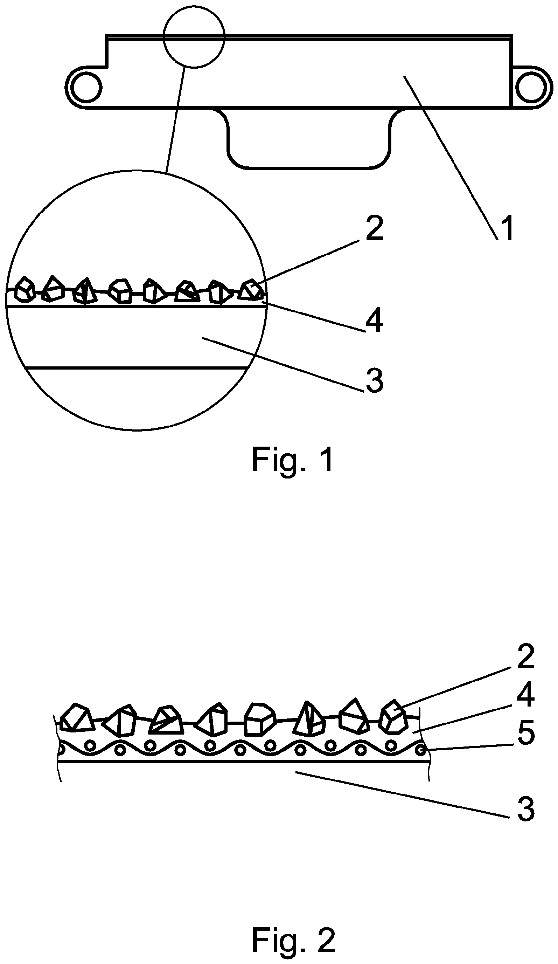

Invention is further disclosed by figures 1 to 6

The depicted distribution of the abrasive grains, the ratio of their sizes to the other dimension of the carrier, belt or segments, is only illustrative and cannot be interpreted as limiting the scope of protection. The depiction of the particular shape of the segment of the belt is illustrative, too.
Figure 1 is a view of the touch surface with the glued abrasive layer. In lower part there is a detailed view of the abrasive grains.
Figure 2 depicts the abrasive layer on the textile (cloth) carrier.
Figure 3 depicts two segments two connected segments of the traction belt.
Figure 4 depicts the mechanical connection of the abrasive layer with the screwed flanges on the side of the segment.
Figure 5 depicts an example of the mechanical fixation by means of a shape lock of the replaceable cartridge with the applied abrasive layer.
Figure 6 is a graph depicting the friction force in the straight direction with the segment according to prior state of the art (a), which segment with the abrasive layer (b) and with segment with the abrasive layer and the magnet (c), all in case of a traction belt moving on the iron plate which has been polluted by the motor oil.

### Examples of realization

### Example 1

In this example according to figures 2, 3 and 6 the belt has 20 segments 1 and it is used for propulsion of the remote controlled trolley for the cleaning of the large-volume tanks with the petroleum products.

All segments 1 have an abrasive cloth - which forms an abrasive layer 2 - on the touch surface 3. Abrasive cloth is glued overhanging trough the edges of the touch surface 3 in at least 10 mm upwards, which increases the resistance of the abrasive layer 2 against ungluing and peeling off from the touch surface 3. The edges of the segment 1 are rounded.

The abrasive layer 2 has zircon abrasive grains, which maintain the sharp-edge of the fracture even after breaking off of the protrusions. The abrasive grains have grit size of 200 µm and they are glued to the carrier 5 in form of a woven linen by means of waterproof glue on the basis of sodium silicate. Glue used to glue the abrasive layer 2 to the degreased touch surface 3 of the segment 1 also contains sodium silicate.

After wearing out the abrasive layer 2 is torn off from the touch surface 3 and replaced by new abrasive layer 2.

Segment 1 is also equipped by two openings with the threads through which it is possible to attach a metal sheet with the glued abrasive grains to the segment 1. These form an easily replaceable abrasive layer 2.

### Example 2

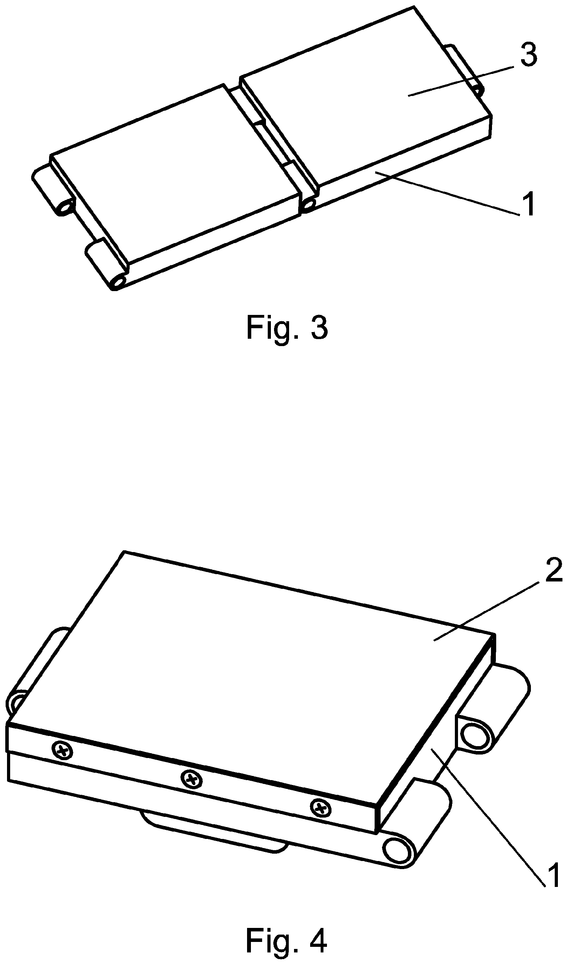

In this example according to figure 4 the abrasive cloth is attached by means of two flanges which are screwed to the sides of the segment 1. A small groove is produced in the side of the segment 1, whereby the flange falls into the groove.

Abrasive grains have grit size between 400 and 600 µm.

### Example 3

In this example a Velcro fastener is used. One side of the fastener is placed on the abrasive cloth; other is attached to the touch surface 3.

### Example 4

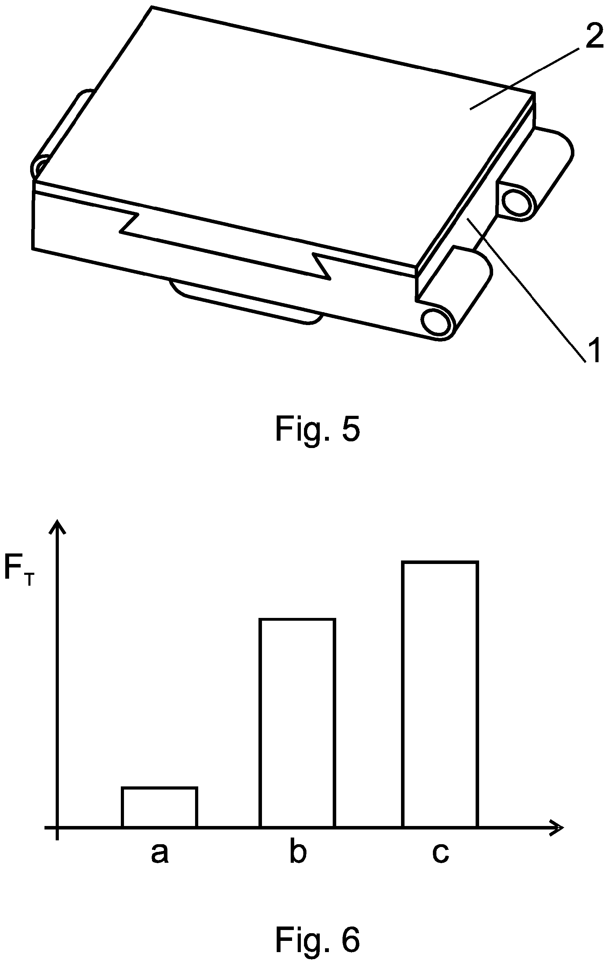

In this example according to figures 1 and 6 a layer 4 of the glue is applied onto the clean touch surface 3, whereby the abrasive grains with grit size 400 µm are evenly poured onto it. After the glue dries out, the touch surface 3 is ready for use.

### Example 5

During the vulcanization of the rubber traction belt the abrasive layer 2 is applied to the touch surfaces 3. Abrasive grains with grit size of 600 µm are vulcanized into the touch surface 3.

### Example 6

Segment 1 is produced from the shaped stainless steel sheet. Magnets are placed inside the segment 1 from the inner side of the touch surface 3. Abrasive layer 2 is glued to the touch surface 3.

### Industrial applicability

Industrial applicability is obvious. According to this invention it is possible to repeatedly produce and use traction belts for the propulsion of creeper undercarriages, which are characterized by the increased traction on the smooth surfaces polluted by various liquid substances or greasy impurities and so on.

### List of related symbols

1- segment
2- abrasive layer
3- touch surface
4- layer of the glue
5- carrier

## Claims

1. . A traction belt of a vehicle, which has a touch surface (3) on its outer circumference designed for a transfer of traction forces from a creeper undercarriage to a ground, and which has elements for the transfer of a torque from a driving wheel of the undercarriage to the traction belt on its inner circumference, and which has elements for a delimitation of a side displacement of the belt, wherein the belt is composed of segments (1) which are mutually connected one after another by pins into the closed belt,
whereby an abrasive grains are placed on the touch surface (3) of the segment (1),
whereby the belt has an abrasive layer (2) with abrasive grains on at least part of the touch surface,
whereby the abrasive grains have a grit size larger than 200 µm, wherein the abrasive layer (2) includes a flat flexible carrier (5) on which the abrasive grains are glued and the abrasive layer (2) with the carrier (5) is replaceable.

2. . The traction belt of the vehicle according to the claim 1 **is characterized by the fact,** that the abrasive grains have the grit size larger than 400 µm; preferably larger than 600 µm.

3. . The traction belt of the vehicle according to the claim 1 or 2 **is characterized by the fact,** that the carrier (5) includes a paper.

4. . The traction belt of the vehicle according any of the claims 1 to 3 **is characterized by the fact**, that the carrier (5) includes a woven cloth.

5. . The traction belt of the vehicle according any of the claims 1 to 4 is **characterized by the fact,** that the abrasive grains are from aluminum oxide and/or from silicon carbide and/or from zircon and/or from ceramic and/or from corundum.

6. . The traction belt of the vehicle according any of the claims 1 to 5 **is characterized by the fact,** that abrasive layer (2) is glued to the touch surface (3).

7. . The traction belt of the vehicle according to the claim 6 **is characterized by the fact,** that a layer (4) of said glue is resistant to oil substances or products from oil.

8. . The traction belt of the vehicle according any of the claims 1 to 7 **is characterized by the fact**, that the carrier (5) of the abrasive layer (2) is connected to the segment (1) by a flange.

9. . The traction belt of the vehicle according any of the claims 1 to 7 **is characterized by the fact,** that the abrasive layer (2) is connected to the touch surface (3) by Velcro fastener.

10. . The traction belt of the vehicle according any of the claims 1 to 9 **is characterized by the fact,** that it includes a magnet drawing the touch surface (3) to the ground.

11. . The traction belt of the vehicle according any of the claims 1 to 10 **is characterized by the fact**, that it is a part of the undercarriage of an automatized an/or remotely controlled trolley.

12. . The traction belt of the vehicle according to the claim 11 **is characterized by the fact,** that the trolley is design for cleaning of a metal bottom of an oil tank.

13. . The traction belt of the vehicle according the claim 11 **is characterized by the fact,** that the trolley is designed for movement on an oil platform or in an oil tanker or in technological devices for a refinement of petroleum products.

## Patentansprüche

1. Ein Raupenlaufband des Fahrzeuges, das auf dem äußeren Umfang Berührungsfläche (3) hat, die zur Übertagung der Zugkräfte aus dem Raupenfahrgestell in den Untergrund bestimmt ist und das auf dem inneren Umfang über Elemente zur Übertragung des Drehmomentes aus dem Fahrgestellantriebsrad auf den Raupenlaufband verfügt und Elemente zur seitlichen Bandführung hat, wobei das Band aus Segmenten (1) besteht, die hintereinander mittels Stifte zu einem geschlossenen Band verbunden sind,
wobei auf der Berührungsfläche (3) den Segmenten (1) die Schleifkörner angeordnet sind,
wobei das Band mindestens in einem Abschnitt der Berührungsfläche Schleifschicht (2) mit den Schleifkörnern hat,
wobei die Schleifkörner größer als 200 µm sind, wobei die Schleifschicht (2) einen flachen flexiblen Träger (5) mit angeklebten Schleifkörnern umfasst
und die Schleifschicht (2) mit dem Träger (5) auswechselbar ist.

2. Das Raupenlaufband des Fahrzeuges gemäß Anspruch 1 **dadurch gekennzeichnet, dass** die Schleifkörner größer als 400 µm sind, vorteilhaft größer als 600 µm.

3. Das Raupenlaufband des Fahrzeuges gemäß Anspruch 1 oder 2 **dadurch gekennzeichnet, dass** der Träger (5) Papier umfasst.

4. Das Raupenlaufband des Fahrzeuges gemäß einem der Ansprüche 1 bis 3 **dadurch gekennzeichnet, dass** der Träger (5) gewebten Textilstoff umfasst.

5. Das Raupenlaufband des Fahrzeuges gemäß einem der Ansprüche 1 bis 4 **dadurch gekennzeichnet, dass** die Schleifkörner aus Aluminiumoxid und/oder Siliziumkarbid und/oder Zirkon und/oder Keramik und/oder Korund bestehen.

6. Das Raupenlaufband des Fahrzeuges gemäß einem der Ansprüche 1 bis 5 **dadurch gekennzeichnet, dass** die Schleifschicht (2) mit der Berührungsfläche (3) verklebt ist.

7. Das Raupenlaufband des Fahrzeuges gemäß Anspruch 6 **dadurch gekennzeichnet, dass** die Schicht (4) des Klebemittels gegen Erdölstoffe oder Erdölprodukte beständig ist.

8. Das Raupenlaufband des Fahrzeuges gemäß einem der Ansprüche 1 bis 7 **dadurch gekennzeichnet, dass** der Träger (5) mit dem Segment (1) über Leiste verbunden ist.

9. Das Raupenlaufband des Fahrzeuges gemäß einem der Ansprüche 1 bis 7 **dadurch gekennzeichnet, dass** die Schleifschicht (2) mit der Berührungsfläche (3) mittels Klettverschluss verbunden ist.

10. Das Raupenlaufband des Fahrzeuges gemäß einem der Ansprüche 1 bis 9 **dadurch gekennzeichnet, dass** es einen Magnet umfasst, der die Berührungsfläche (3) zum Untergrund anzieht.

11. Das Raupenlaufband des Fahrzeuges gemäß einem der Ansprüche 1 bis 10 **dadurch gekennzeichnet, dass** es Fahrwerksbestandteil eines automatisierten und/oder ferngesteuerten Wagen ist.

12. Das Raupenlaufband des Fahrzeuges gemäß Anspruch 11 **dadurch gekennzeichnet, dass** der Wagen zur Reinigung des Metallbodens des Tanks für Erdölprodukte bestimmt ist.

13. Das Raupenlaufband des Fahrzeuges gemäß Anspruch 11 **dadurch gekennzeichnet, dass** der Wagen zur Bewegung auf einer Ölbohrinsel oder auf einem Öltanker oder auf technologischen Anlagen zur Verarbeitung von Erdölprodukten bestimmt ist.

## Revendications

1. Une courroie de traction de véhicule qui contient sur sa circonférence extérieure, une surface de contact (3) destinée à une transmission des forces de traction du train chenillé au sol, et qui contient sur sa circonférence intérieure, des éléments pour transférer le couple d'entraînement d'une roue du châssis vers la courroie de traction et comporte des éléments du guidage latéral de la courroie, étant donné que la courroie est constituée de segments (1) qui sont reliés les uns derrière les autres par goupilles pour former une courroie fermée
où des grains abrasifs sont placés sur la surface de contact (3) du segment (1),
tandis que la courroie contient sur une partie au moins de sa surface de contact une couche abrasive (2) avec grains abrasifs,
des grains abrasifs ayant une taille supérieure à 200 µm, tandis que la couche abrasive (2) comprend un support flexible plat (5) avec des grains abrasifs collés
et la couche abrasive (2) avec le support (5) sont remplaçables.

2. La courroie de traction de véhicule selon la revendication 1 **caractérisée en ce que** les grains abrasifs sont de taille supérieure à 400 µm, de préférence supérieure à 600 µm.

3. La courroie de traction de véhicule selon la revendication 1 ou 2 **caractérisée en ce que** le support (5) contient du papier.

4. La courroie de traction de véhicule selon la revendication 1 ou 3 **caractérisée en ce que** le support (5) contient du textile tissé.

5. La courroie de traction de véhicule selon quelleconque des revendications 1 à 4 **caractérisée en ce que** les grains abrasifs sont en oxyde d'aluminium et/ou en carbure de silicium et/ou en zirconium et/ou en céramique et/ou en corindon.

6. La courroie de traction de véhicule selon quelleconque des revendications 1 à 5 **caractérisée en ce que** la couche abrasive (2) est collée à la surface de contact (3).

7. La courroie de traction de véhicule selon la revendication 6 **caractérisée en ce que** la couche(4) de colle est résistante aux substances pétrolières ou aux produits pétroliers.

8. La courroie de traction de véhicule selon quelleconque des revendications 1 à 7 **caractérisée en ce que** le support (5) de la couche abrasive (2) est fixée au segment (1) par un rebord.

9. La courroie de traction de véhicule selon quelleconque des revendications 1 à 7 **caractérisée en ce que** la couche abrasive (2) est fixée à la surface de contact (3) par « velcro ».

10. La courroie de traction de véhicule selon quelleconque des revendications 1 à 9 **caractérisée en ce qu'** elle comprend d'un aimant attirant la surface de contact (3) vers la base.

11. La courroie de traction de véhicule selon quelleconque des revendications 1 à 10 **caractérisée en ce qu'** elle fait partie du chassis du chariot automatisé et / ou télécommandé.

12. La courroie de traction de véhicule selon la revendication 11 **caractérisée en ce que** le chariot est destiné à nettoyer le fond métallique du réservoir des substances pétrolières.

13. La courroie de traction de véhicule selon la revendication 11 **caractérisée en ce que** le chariot est destiné à se déplacer sur plate-forme pétrolière ou sur pétrolier ou sur équipements technologiques traitant des produits pétroliers.
